# EUROPEAN PATENT APPLICATION

(11) **EP 2 237 636 A1**
(43) Date of publication of application: **06.10.2010**
(21) Application number: 07855799.8
(22) Date of filing: 25.12.2007
(51) Int. Cl.: H04W 88/02

(54) **TERMINAL DEVICE WITH SEPARATED CARD AND STATION BASED ON WIMAX SYSTEM**

(71) Applicant: ZTE Corporation, Shenzhen, Guangdong 518057 (CN)
(72) Inventor: ZHANG, Zhengyang, Guangdong 518057 (CN); ZHU, Xing, Guangdong 518057 (CN)
(74) Representative: Ilgart, Jean-Christophe
(86) International application number: PCT/CN2007/003795
(87) International publication number: WO 2009/079869

(57) **Abstract**

The present invention discloses a mobile terminal with separated card and station based on World Interoperability for Microwave Access, WiMAX, system, in communication field, which comprises: a main station; one or more consumer identification modules, connected to the main station in a removable way.

## Description

### Filed of the Invention

The present invention relates to the field of Broadband Wireless Access (BWA) communication technology, in particular to a terminal device with separated card and station based on WiMAX (World Interoperability for Microwave Access) system.

### Background of the Invention

The WiMAX (World Interoperability for Microwave Access) is a broadband wireless access metropolitan area network technology based on IEEE (Institute for Electrical and Electronic Engineers) 802.16 series standards. The basic target of the WiMAX is to ensure interconnection and intercommunication of the wireless devices of different manufacturers under the metropolitan area network access environment, which is mainly used for providing high speed broadband access of the last one kilometer for households, enterprises and mobile communication networks, and future personal mobile communication service. Compared with other broadband wireless access technologies, the WiMAX has advantages, such as wide coverage area, strong expansibility, and controllable QoS (Quality of Service).

The WiMAX terminal, which is also called as Subscriber Station (SS), can be divided into aplurality of types according to its purposes and functions, including the following specified types:
(1) Handset (mobile phone) : such kind of subscriber station device has small volume, is suitable for hand holding, and can support service independently;
(2) Vehicular station: such kind of subscriber station device can not be used independently, needs to be installed on/connected to a motor vehicle, and can support service; generally, compared with the handset, the vehicular station has a higher grade of the maximum transmission power;
(3) Fixed wireless access station: such kind of subscriber station device substitutes wireless connection for wired connection of traditional fixed station through 802.16e air interface technology, and can support service; generally, compared with the handset, the fixed wireless access station has a higher grade of the maximum transmission power, and needs external power source;
(4) Data card: such kind of subscriber station device can not be used independently, needs to be connected to other devices, such as portable computer or personal digital assistant (PDA), and then can support service;
(5) Other terminal: such kind of subscriber device does not belong to the above types, can be used independently or used jointly with other devices, and supports service.

At present, since the current WiMAX technology is still at the researching stage, 802.16 series standards constitute only the protocols and specifications for the physical layer (PHY) and the Media Access Control (MAC) layer, and the key technologies related to the protocols are described in detail. However, the factors for consumer security and network operation has not been much considered; and presently, the WiMAX terminal used mostly uses integrated card and station mode, such as CDMA (Code Division Multiple Access) mobile phone, personal handy-phone system. During the implementation process of the present invention, the inventor finds that the WiMAX terminal with the integrated card and station at least has the following defects:
(1) For a WiMAX terminal with integrated card and station, X.509 certificate and encryption algorithm for device authentication are provided by chip and device manufacturers, and operators have not directly participated, therefore there is hidden danger to a certain extent;
(2) The design of integrated card and station is not favorable for the operator to provide new value-added services for the consumer, and the consumer also can not change the terminal number as required;
(3) The use of the terminal device is mostly limited in specified areas, which is not favorable for the mobility of the consumer and the update of the device.

Therefore, in order to further promote the development of the WiMAX technology, meanwhile, to eliminate the potential hidden danger of the current WiMAX terminal and to enhance the convenience of operation and use, a novel WiMAX terminal is needed.

### Summary of the Present Invention

The present invention is proposed by considering the problems, such as poor mobility, hidden danger in the terminal with integrated card and station under WiMAX environment in related technology. Therefore, the present invention is disclosed herein to provide a terminal device with separated card and station based on WiMAX system, which can overcome the inconvenience brought by the current binding of the station and the card.

According to the present invention, a mobile terminal with separated card and station based on WiMAX system is provided.

The mobile terminal comprises a main station, one or more consumer identification modules, connected to the main station in a removable way.

Preferably, the one or more consumer identification modules are connected to the main station through an interface.

Preferably, the one or more consumer identification modules are arranged in a slot of the main station.

Preferably, the one or more consumer identification modules are realized through an IC card.

Preferably, the main station is configured to realize at least one of the following functions: wireless signal receiving and transmitting, base band processing and high-level application.

Preferably, the one or more consumer identification modules are configured to store information related to the mobile terminal or a consumer of the mobile terminal, including consumer identification information, device information, consumer authentication information, data, program and information related to consumer.

Preferably, the one or more consumer identification modules are configured to perform authentication algorithm to obtain an authentication result, and the mobile terminal submits the authentication result to network side to carry out consumer authentication.

Further preferably, the mobile terminal is connected to an access service network through 802.16e air interface.

In the present invention, the following beneficial effects can at least be realized through the separation of the main station and the consumer identification model: improving the security of the consumer and the flexibility of the operation, improving the consumer experience, and can promoting the further development of the terminal industry.

Other characteristics and advantages of the present invention will be explained in the following description, and will be apparent partly from the specification and embodiments of the present invention. The object and other advantages can be realized and obtained through the structure pointed out from the specification, claims, and the drawings.

### Brief Description of the Drawings

The drawings in the specification provide a further understanding to the present invention and constitute a part of the description. The exemplary embodiments of the present invention and the explanation thereof are given thereafter by way of illustration only, and thus are not limitative of the present invention, and in the drawings:
Fig.1 is a schematic structure diagram of a mobile terminal with separated card and station based on WiMAX system according to an embodiment of the present invention;
Fig.2 is a schematic diagram of the arrangement of the mobile terminal with separated card and station based on WiMAX system in a WiMAX network frame according to an embodiment of the present invention;
Fig.3 is a schematic diagram of processing authentication operation of the mobile terminal with separated card and station based on WiMAX system according to an embodiment of the present invention.

### Detailed Description

In the commercial usedmobile communication systems of GSM (Global System for Mobile Communication) /CDMA/PHS (Personal Handyphone System) and the like, separated card and station has become a common choice of operator and subscriber, and has showed significant advantages in operation, and the 3G communication system also maintains and inherits the way of separated card and station. If the WiMAX terminal designed with separated card and station is introduced to the WiMAX system, the compatibility with the prior mobile communication system and terminal can be better maintained, and the complexity of the future WiMAX/2G/3G multi-mode terminal design can be reduced. Based on this consideration, the present invention provides a mobile terminal with separated card and station based on WiMAX system.

The preferable embodiments of the present invention will be described hereinafter in conjunction with accompanying drawings. It shall be understood that the preferable embodiments of the present invention described herein are only used to illuminate and explain the present invention and shall not be construed as limitations on the same. According to the embodiment of the present invention, a mobile terminal (hereafter referred to as WiMAX terminal for short, or WiMAX Subscriber Station (SS)) with separated card and station based on the WiMAX system is provided. The embodiment of the present invention will be described hereafter in the following aspects: the logical structure of the WiMAX terminal, the use in the WiMAX network system frame, and the log-on registration authentication of the WiMAX terminal, etc.

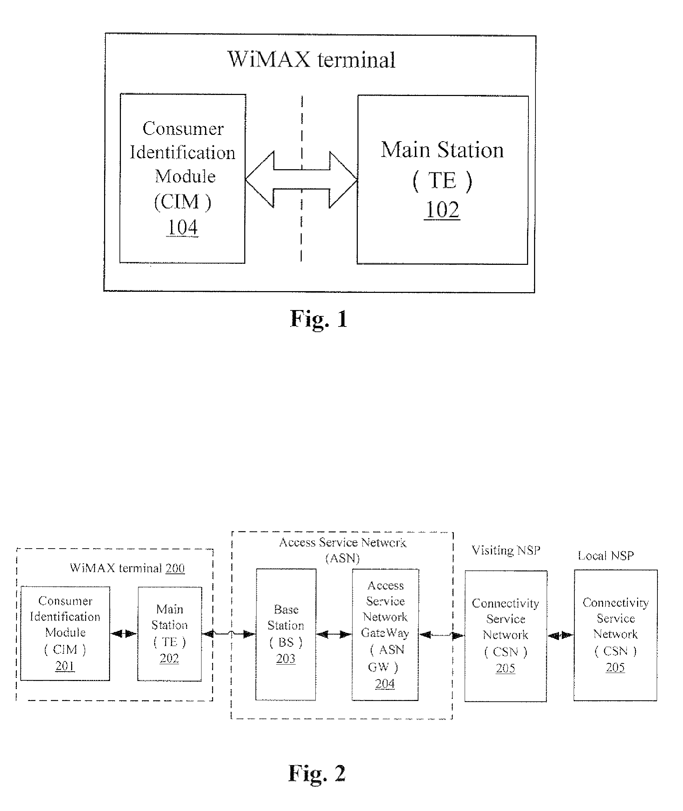

As shown in Fig.1 the WiMAX terminal according to the embodiment of the present invention comprises: a main station 102, and one or more Consumer Identification Modules (CIM) 104 (for the convenience of description, one module is shown in the figure.) connected to the main station in a detachable way (or a removable way) in order to realize the functions of single mode, double mode, or multi-mode mobile terminals as required.

Preferably, the CIM 104 is connected to the main station through an interface (preferably, a standard interface). The WiMAX terminal uses standardized interface according to the embodiments of the present invention, which can ensure an independent evolution of the terminal supplier without depending on the operator, therefore promoting the development of terminal industry.

Preferably, the CIM 104 is a physical means isolated from the main station 102, can generally be realized through an IC card, and is arranged in the slot of the main station 102, therefore the CIM can also be called as CIM card.

Particularly, the main station 102 can be configured to realize at least one of the following functions: wireless signal receiving and transmitting, baseband processing and high-level application of the mobile terminal with separated card and station. The CIM 104 is mainly configured to store data, program, and private data and service data such as security identifier, particularly comprises the information related to the mobile terminal or the consumer of the mobile terminal, such as consumer identification information (CIM ID), device information (TE_ID), consumer authentication information such as authentication encryption algorithm and cryptographic key information, and consumer related information.

Since the consumer identification module (CIMcard) 104 stores the classified information of the consumer identifier information and authentication cryptographic key and the like, and since the reading and writing device and the algorithm of the consumer identification modules are not open to the public and operated privileged by the operator, the security of the consumer identification can be well ensured through the separation of the card and the station, i.e., the CIM 104 and the main station 102 are connected in a detachable way. In addition, the confidential information such as the consumer identifier information and the authentication cryptographic key can not be preset by the device manufacturer, and when the consumer registers in the network, the operator provides the consumer with the WiMAX terminal with separated card and station (the main station and CIM card), and the private data and the service data of the consumer are written in the CIM card by the operator. The same information is also stored in the AS (Authentication Server) on the system side and is used for the access authentication of the consumer.

Further description concerning the above information will be given thereafter.
(1) the consumer identification information (CIM_ID) : a unique identifier assigned to each consumer by the WiMAX communication system, which can be configured to process the consumer identification, account the communication fee and the like, and is written by the operator;
(2) the equipment information (TE_ID): a unique identification code for the terminal equipment, TE, which is configured to prevent the network from embezzling or accessing by an illegal device, and is set by the manufacture when leaving the factory;
(3) the authentication encryption algorithm and cryptographic key (Ki): used to perform an authentication when a consumer accesses to the network, wherein the consumer encryption algorithm uses a Data Encryption Standard (DES) encryption algorithm based on symmetrical cryptographic key, therefore, the cryptographic key, Ki, information belongs to confidential information, and is written in the CIM 104 by the operator when the consumer registers in the network. The same information is also stored in the AS on the system side and is used to authenticate the access of the consumer;
(4) other consumer related information: short messages, fixed dialing, abbreviated dialing, performance parameters, fee accounting, and other data stored by the consumer, etc.

Fig.2 is a schematic diagram of the arrangement of the mobile terminal with separated card and station based on the WiMAX system in a WiMAX network structure according to an embodiment of the present invention. As shown in Fig.2, the WiMAX network structure mainly comprises a WiMAX terminal 200, an Access Service Network (ASN), a Connectivity Service Network (CSN) 205.

As mentioned above, the WiMAX terminal 200 comprises two logical means of a detachable Consumer IdentificationModule (CIM) 201 and a main station (TE). The WiMAX terminal 200 is connected to an Access Service Network (ASN) through 802.16e air interface to complete the end-to-end connection.

The Access Service Network (ASN) comprises a Base Station (BS) 203 and an Access Service Network GateWay (ASN GW) 204, and has the functions such as accessing control, wireless resource management, ASN internal movable management, and switching control.

The Connectivity Service Network (CSN) 205 has the main functions of establishing consumer session connection, distributing IP addresses for the terminals, AAA server, Internet access, mobility management between ASNs and the like. According to the registration place of the consumer, the CSNs are divided into two types of visiting place and local network service provider (NSP).

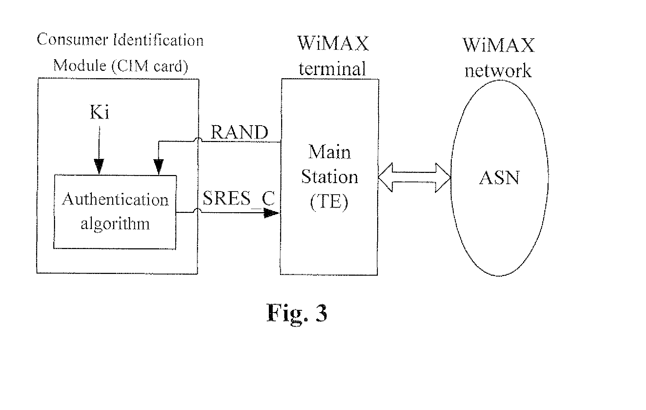

Preferably, the CIM 104 of the WiMAX terminal according to the embodiment of the present invention can be configured to perform authentication algorithm to obtain an authentication result, and the WiMAX terminal submits the authentication result to the network side to process consumer authentication. Particularly, Fig.3 is a schematic diagram of processing authentication of the WiMAX terminal according to the embodiment of the present invention.

In Fig.3, Ki is a consumer authentication cryptographic key, RAND is a random number, and SRES_C denotes an authentication result. As shown in Fig.3, the authentication process of the WiMAX terminal according to the embodiment of the present invention is described as follows:
Firstly, the WiMAX terminal starts up, and sends a registration request to the network side;

Then, the WiMAX terminal performs the authentication algorithm through the Consumer Identification Module (CIM card) according to the consumer authentication processing request from the network side, wherein the CIM takes the consumer authentication cryptographic key (Ki) and the random number (RAND) provided by the network as parameters.

Further, the WiMAX terminal returns the authentication result, SRES_C, of the CIM to the network; the network side compares the authentication result of the WiMAX terminal with that of the authentication server, and returns an authentication result message;

After the authentication of the WiMAX terminal is succeeded, the network provides contracting service for the consumer.

The above mentioned contents show that the main station (TE) and the Consumer Identification Module (CIM card) of the WiMAX terminal are physically separated by using the design of separated card and station, which, for the consumer side, can improve the consumer security and at the same time provide more optional space for WiMAX consumers, such as the consumer can freely select and update the type of the terminal; which, for the operator side, can provide more convenience for the operator to provide new value-added service for the consumer, and thus the service scope of the terminal can be expanded; and which, for the whole terminal industry, can further promote the development of the terminal industry.

The descriptions above are only preferable embodiments of the present invention, which are not used to restrict the present invention. For those skilled in the art, the present invention may have various changes and variations. Any amendments, equivalent substitutions, improvements etc. within the spirit and principle of the present invention are all concluded in the scope of protection of the present invention.

## Claims

1. A mobile terminal with separated card and station based on World Interoperability for Microwave Access, WiMAX, system, **characterized by**, comprising:
a main station;
one or more consumer identification modules, connected to the main station in a removable way.

2. The mobile terminal with separated card and station according to Claim 1, **characterized in that** the one or more consumer identification modules are connected to the main station through an interface.

3. The mobile terminal with separated card and station according to Claim 1, **characterized in that** the one or more consumer identification modules are arranged in a slot of the main station.

4. The mobile terminal with separated card and station according to Claim 1, **characterized in that** the one or more consumer identification modules are realized through an IC card.

5. The mobile terminal with separated card and station according to Claim 1, **characterized in that** the main station is configured to realize at least one of the following functions: wireless signal receiving and transmitting, baseband processing and high-level application.

6. The mobile terminal with separated card and station according to Claim 1, **characterized in that** the one or more consumer identification modules are configured to store information related to the mobile terminal or a consumer of the mobile terminal, including consumer identification information, device information, consumer authentication information, data, program and information related to consumer.

7. The mobile terminal with separated card and station according to Claim 1, **characterized in that** the one or more consumer identification modules are configured to perform authentication algorithm to obtain an authentication result, and the mobile terminal submits the authentication result to network side to carry out consumer authentication.

8. The mobile terminal with separated card and station according to any one of Claim 1 to 7, **characterized in that** the mobile terminal is connected to an access service network through 802.16e air interface.
